Europäisches Patentamt

European Patent Office

Office européen des brevets

(19)

(11) Veröffentlichungsnummer: **0 214 326**
**B1**

(12) **EUROPÄISCHE PATENTSCHRIFT**

(45) Veröffentlichungstag der Patentschrift:
**10.01.90**

(21) Anmeldenummer: **85111256.5**

(22) Anmeldetag: **06.09.85**

(51) Int. Cl.⁴: **H04N 7/087**, G04G 15/00
// H04N5/782

(54) Verfahren zum Übertragen von Programmierungs-Informationen für Videoaufzeichnungsgeräte.

(43) Veröffentlichungstag der Anmeldung:
**18.03.87 Patentblatt 87/12**

(45) Bekanntmachung des Hinweises auf die Patenterteilung:
**10.01.90 Patentblatt 90/2**

(84) Benannte Vertragsstaaten:
**AT BE CH FR GB IT LI NL SE**

(56) Entgegenhaltungen:
EP-A- 0 118 104
DE-C- 3 313 799

**RUNDFUNKTECHNISCHE MITTEILUNGEN, Band 26,
Nr. 6, 1982, Seiten 254-257, Hamburg, DE; G. HOFMANN
et al.: "Videotext programmiert videorecorder"
NACHRICHTENTECHNISCHE ZEITSCHRIFT, Band 35,
Nr. 6, Juni 1982, Seiten 368-378, Schwäbische Gmund,
DE; H.E. KRÜGER: "Das digitale
Fernsehkennungssystem ZPS"**

(73) Patentinhaber: **Interessengemeinschaft für
Rundfunkschutzrechte GmbH Schutzrechtsverwertung
& Co. KG., Bahnstrasse 62, D-4000 Düsseldorf 1(DE)**

(72) Erfinder: **Eltz, Gerhard, Welfenstrasse 2,
D-8011 Poing(DE)**
Erfinder: **Oberlies, Karl-Uirich, Herderstrasse 6f,
D-5600 Wuppertal 11(DE)**
Erfinder: **Hofmann, Günter, Grüner Brunnenweg 94,
D-5000 Köln 30(DE)**
Erfinder: **Neumann, Andreas, Brüsseler Platz 26,
D-5000 Köln 1(DE)**
Erfinder: **Koch, Herbert, Am Weinstock 16,
D-6200 Wiesbaden-Nordenstadt(DE)**
Erfinder: **Schadwinkel, Eckhard, Meianchthonstrasse 41,
D-5000 Köln 80(DE)**

(74) Vertreter: **Gornott, Dietmar, Dipl.-Ing., Zilleweg 29,
D-6100 Darmstadt 12(DE)**

**Beschreibung**

Die Erfindung bezieht sich auf ein Verfahren gemäß dem Oberbegriff des Patentanspruchs 1. Ein derartiges Verfahren ist aus "Rundfunktechnische Mitteilungen", 1982, Heft 6, Seiten 254 bis 257 bekannt.

Die Bedienung von Videoaufzeichnungsgeräten (Videorecordern) bei der Programmierung ist vielen Rundfunkteilnehmern zu kompliziert. Über ein Tastenfeld muß dem Recorder das Aufnahmedatum, die Anfangs- und Endzeitpunkte des aufzuzeichnenden Programmbeitrages sowie die betreffende Programmquelle mitgeteilt werden. Abhängig vom Recordertyp müssen dafür bis zu vierzehn Tastenbetätigungen ausgeführt werden. Eine Bedienvereinfachung kann beispielsweise erreicht werden, indem die Fernsehprogrammzeitschriften einen Strichcode für jeden Programmbeitrag abdrucken. Durch Überstreichen des Codes mit einem am Videorecorder angeschlossenen Lesestift werden die Strichcodedaten in eine Zusatzelektronik übernommen und dann zur Recorderprogrammierung verwendet.

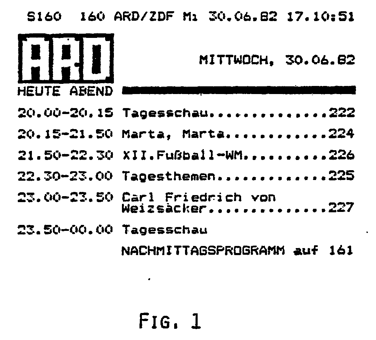

Bei einem alternativen Modell zur Bedienvereinfachung ("Rundfunktechnische Mitteilungen", 1982, Heft 6, Seiten 254 bis 257) werden die zur Programmierung erforderlichen Daten aus dem Teletextprogramm übernommen. Teletext (in der Bundesrepublik Deutschland "Videotext" genannt) stellt einen Zusatzdienst der Rundfunkanstalten dar, wobei Seiten mit Text und graphischen Zeichen in codierter Form in unbenutzten Zeilen des Fernsehsignals zyklisch übertragen werden. Die decodierten Teletextdaten werden in Form stehender Fernsehbilder als Teletextseiten wiedergegeben. Ein Beispiel für die Darstellung der zur Programmierung eines Videorecorders erforderlichen Daten ergibt sich aus Fig. 1. Der Fernsehzuschauer wählt die in fig. 1 dargstellte Programmübersichtstafel (Seite 160) an, selektiert den gewünschten Programmbeitrag auf elektronische Weise, z.B. mittels eines Cursers oder durch Drücken einer Anwähltaste und markiert den selektierten Programmbeitrag für den Programmiervorgang, bei welchem die Anfangs- und Endzeitpunkte des markierten Programmbeitrags zusammen mit dem Kürzel der Programmquelle (im dargestellten Beispielsfalle "ARD") und dem Kalendardatum (im dargestellten Beispielsfalle 30.06.1982) in den Videorecorder eingelesen werden. In Verbindung mit einer IST-Programmbeitragskennung, welche unmittelbar vor und gegebenenfalls noch während der Ausstrahlung eines Programmbeitrags in einer als "Datenzeile" bezeichneten, ungenutzten Zeile des Fernsehsignals übertragen wird, stellt diese Art der Videorecorder-Programmierung ein sicher funktionierendes System dar. Wie hierzu in der DE-PS 33 13 799 im einzelnen ausgeführt ist, "lauert" der Videorecorder einige Zeit vor der programmierten Anfangszeit eines gewünschten Programmbeitrags auf das Auftreten der IST-Programmbeitragskennung, welche zusammen mit dem gewünschten Programmbeitrag gesendet wird.

Der Videorecorder beginnt mit der Aufzeichnung, wenn seine vorprogrammierte SOLL-Programmbeitragskennung mit der detektierten IST-Programmbeitragskennung übereinstimmt. Mit einer derartigen ereignisgesteuerten Aufzeichnung kommt es nicht mehr darauf an, wann ein Programmbeitrag gesendet wird, so daß Beitragsverschiebungen ohne folgen für die Aufzeichnung bleiben. Falls jedoch ein Programmbeitrag abgesetzt wird, muß - um ein unnötig langes "Lauern" des Recorders zu vermeiden - anstelle der IST-Programmbeitragskennung ein spezielles Ausfall-Erkennungssignal gesendet werden, welches ein Abschalten des Recorders auslöst. Im Falle von Programmänderungen, welche von aktuelleren Programmzeitschriften noch angekündigt werden können, wird im Code der SOLL-Programmbeitragskennung ein zusätzliches Austausch-Erkennungsbit aufgenommen, welches bei der Aussendung des Ausfall-Erkennungssignals mitgesendet wird. Die auf das Austausch-Erkennungsbit programmierten Recorder schalten beim Empfang des Ausfall-Erkennungssignal nicht ab, sondern schalten lediglich von dem ereignisgesteuerten Aufzeichnungsbetrieb auf den zeitgesteuerten Aufzeichnungsbetrieb um, so daß diese Recorder die Aufzeichnung zum vorprogrammierten Zeitpunkt starten. Damit sind jedoch sämtliche Nachteile der zeitgesteuerten Aufzeichnung hinsichtlich einer Verschiebung des Sendebeginns für den Ersatz-Programmbeitrag vorhanden.

Die **Aufgabe** der Erfindung besteht darin, unter Ausnutzung der Übertragung einer IST-Programmbeitragskennung in der Datenzeile die Steuerung des Aufzeichnungsbetriebs eines Videorecorders mittels Teletext dahingehend zu verbessern, daß auch im Falle von Programmbeitragsänderungen der gewünschte Programmbeitrag stets in voller Länge aufgezeichnet wird.

Die erfindungsgemäße Lösung ist im kennzeichnenden Teil des Patentanspruchs 1 enthalten.

Vorteilhafte Ausgestaltungen und Weiterbildungen des Verfahrens nach Anspruch 1 ergeben sich aus den Unteransprüchen.

Die Erfindung wird anhand von Ausführungsbeispielen in den Zeichnungen näher erläutert. Es zeigt:

Fig. 1 ein Beispiel einer nach einem bekannten Verfahren erstellten Teletext-Programmübersichtstafel;

Fig. 2 ein Beispiel einer nach dem erfindungsgemäßen Verfahren erstellten Teletext-Programmübersichtstafel, und

Fig. 3 die Übersichtstafel nach Fig. 2, wie sie vom Zuschauer gesehen wird.

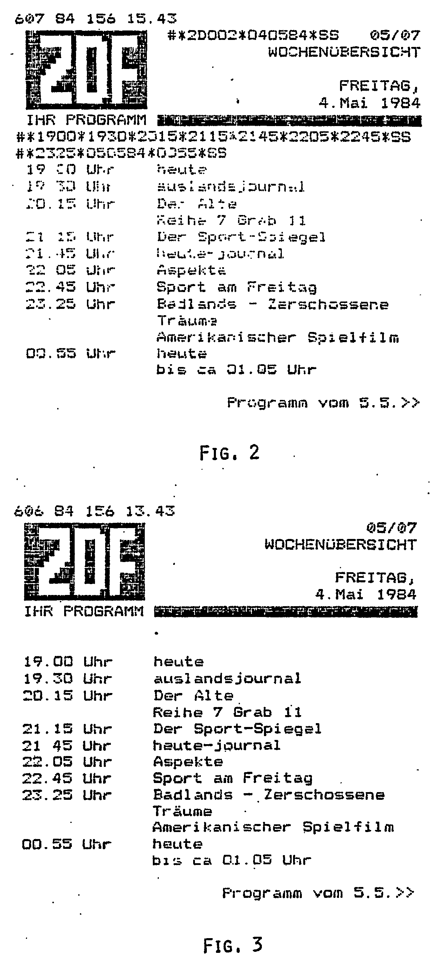

Bei der Teletext-Programmübersichtstafel nach Fig. 2 sind im Unterschied zu Fig. 1 nur die Anfangszeitpunkte der einzelnen Programmbeiträge aufgeführt, also beispielsweise "19.00 Uhr heute", "19.30 Uhr auslandsjournal" usw. Nur für den letzten Programmbeitrag, im dargestellten Beispielsfalle "00.55 Uhr heute", ist der Endzeitpunkt, also "01.05 Uhr" angegeben. Diese Gestaltung der Programmübersichtstafel erleichtert nicht nur die Übersicht über die einzelnen Programmbeiträge für den Fernsehzuschauer, sondern läßt dem Redakteur eine größere Freiheit hinsichtlich der Gestaltung der Übersichtstafel. Der Wegfall der Endzeitpunkte aller Programmbeiträge bis auf den letzten Programmbeitrag wird dadurch ermöglicht, daß der Videorecorder so programmiert und ausgebildet wird, daß er aus dem Anfangszeitpunkt eines Programmbeitrages den Endzeitpunkt des unmittelbar vorangehenden Programmbeitrages ermittelt. Zusätzlich wird gemäß Fig. 2 eine SOLL-Programmbeitragskennung in Form dreier verdeckter Datenblöcke bzw. Label, welche gemäß Fig. 3 für den Fernsehzuschauer nicht sichtbar sind, innerhalb der Teletextseite übertragen. Im betrachteten Beispielsfalle haben diese Datenblöcke bzw. Label folgenden Inhalt:

(1) #*2D002*040584*SS
(2) #*1900*1930*2015*2115*2145*2205*2245*SS
(3) #*2325*050584*0055*SS

Der Datenblock Nr. 1 enthält die Kennziffer "2D002" der Programmquelle "ZDF" sowie das Kalenderdatum "040584" des Sendetages 04. Mai 1984. Das Zeichen # bedeutet "verdeckte Anzeige", während das Zeichen * ein Trennzeichen darstellt. Das Zeichen "SS" stellt ein Fehlerschutzwort dar, das beispielsweise der Quersumme der vorangegangenen Ziffern entspricht.

Der Datenblock Nr. 2 besteht aus einer Folge von vierstelligen Zahlen, z.B. "1900" welche in der Regel den Anfangszeiten, z.B. "19.00 Uhr" der in der Übersichtstafel aufgelisteten Programmbeiträge entsprechen. Die Reihenfolge der vierstelligen Zahlen ist festgelegt, und zwar im Normalfalle in der Reihenfolge der auf der Übersichtstafel aufgelisteten Programmbeiträge. Auf die hiervon abweichenden Fälle soll später eingegangen werden. Am Ende des Datenblocks Nr. 2 wird wieder das Fehlerschutzwort "SS" übertragen.

Der Datenblock Nr. 3 enthält zunächst die vierstellige Zahl "2325" (entsprechend dem Programmbeitrag "Badlands - Zerschossene Träume" um 23.25 Uhr). Es folgt dann das neue Kalenderdatum "050584" (entsprechend dem 05. Mai 1984), da der nächste Programmbeitrag "heute" um 00.55 Uhr und damit am 05. Mai 1984 ausgestahlt werden soll. Nach dem neuen Kalenderdatum folgt die vierstellige Zahl "0055" für den um 00.55 Uhr auszustrahlenden Programmbeitrag "heute". Am Ende des Datenblocks Nr. 3 wird wieder das Fehlerschutzwort "SS" übertragen.

Eine Abweichung vom vorstehend erwähnten "Normalfall" liegt bei einer Änderung oder Verschiebung eines Programmbeitrages vor. Bei einer zeitlichen Beitragsverschiebung am gleichen Kalendertag bleibt die vierstellige Kennziffer des betreffenden Programmbeitrages unverändert, d.h., es besteht keine Übereinstimmung mit dem neuen Anfangszeitpunkt.

Voraussetzungsgemäß wird unmittelbar vor und gegebenenfalls während der Ausstrahlung jedes Programmbeitrages eine IST-Programmbeitragskennung in der Datenzeile des ausgestrahlten Fernsehsignals übertragen, auf welche der Recorder "lauert". Im Falle einer zeitlichen Programmbeitragsverschiebung während desselben Kalendertages wird verabredungsgemäß auch in der IST-Programmbeitragskennung die vierstellige Kennziffer unverändert gelassen. Der Recorder beginnt damit mit der Aufzeichnung erst, wenn die unveränderte, vierstellige Kennziffer in der IST-Programmbeitragskennung mit der programmierten, ebenfalls unveränderten vierstelligen Kennziffer der SOLL-Programmbeitragskennung übereinstimmt. Die Programmbeitragsverschiebung wird dem Fernsehzuschauer in dem sichtbaren Teil der Programmübersichtstafel (Fig. 3) angezeigt. Falls der Recorderbenutzer hierdurch eine Neuprogrammierung vornimmt, bedeutet dies in Wirklichkeit, daß er die bisherige Programmierung nochmals vornimmt.

Falls an den Programmplatz eines vorgesehenen Beitrages ein anderer Beitrag gesetzt wird, so wird für diesen Ersatzbeitrag eine vierstellige Kennziffer verwendet, welche vorzugsweise nur geringfügig von seinem tatsächlichen Anfangszeitpunkt abweicht, beispielsweise "2016", wenn im Falle der Fig. 2 der Programmbeitrag "Der Alte" gestrichen und um 20.15 Uhr ein aktueller Beitrag, beispielsweise anläßlich des Ablebens einer Persönlichkeit, kurzfristig ins Programm aufgenommen wird. Hierdurch werden Verwechslungen mit der Kennziffer "2015" des gestrichenen Beitrags "Der Alte" vermieden, so daß der auf den gestrichenen Beitrag "Der Alte" programmierte Recorder den Ersatzbeitrag nicht aufzeichnet. Um den Ersatzbeitrag, welcher auf einer aktualisierten Teletext-Übersichtstafel ausgewiesen wird, aufzuzeichnen, kann der Recorderbenutzer eine entsprechende Programmierung mit der Kennziffer "2016" vornehmen.

Der beispielsweise auf die Kennziffer "2015" lauernde Recorder erkennt aufgrund der geringen positiven Abweichung von "2015" auf "2016", daß ein Beitragsaustausch stattgefunden hat und beendet daher seinen Lauerbetrieb. Falls der Programmbeitrag nur zeitlich verschoben wird, wird als Kennziffer für den eingeschobenen Beitrag eine geringfügig prognostizierten Anfangszeitpunktes gewählt. Der im betrachteten Beispielsfalle auf die Kennziffer "2015" lauernde Recorder erkennt aufgrund der geringen negativen Abweichung von "2015" auf "2014", daß eine zeitliche Beitragsverschiebung stattgefunden hat und setzt daher seinen Lauerbetrieb fort.

Anstelle der dauernden Übertragung einer IST-Programmbeitragskennung kann eine derartige Kennung ausschließlich im Falle der Verschiebung eines Programmbeitrages im Fernsehsignal ausgestrahlt werden. Im vorstehend erwähnten "Normalfalle" erfolgt dann anstatt einer Ereignissteuerung eine Zeitsteuerung des Videorecorders, wobei ihm der Betriebszustand "Zeitsteuerbetrieb" in geeigneter Form signalisiert wird, beispielsweise durch ein spezielles Label in der Datenzeile, worunter auch das Fehlen eines Labels über ein bestimmtes Zeitintervall hinweg zu verstehen ist.

**Patentansprüche**

1. Verfahren zum Übertragen von Programmierungsinformationen für Videoaufzeichnungsgeräte in Form von zyklisch innerhalb eines Fernsehsignals wiederholten Daten (Teletextdaten), welche wiedergabeseitig als stehende Fernsehbilder (Teletextseiten) darstellbar sind, wobei als Programmierungsinformationen zumindest die Programmquellenkennung, das Kalendardatum und die prognostizierten Anfangs- und ggfs. Endzeitpunkte des aufzuzeichnenden Programmbeitrags als sichtbarer Bestandteil einer oder mehrerer Teletextseiten übertragen werden, und wobei eine IST-Programmbeitragskennung unmittelbar vor und ggfs. während der Ausstrahlung eines Programmbeitrages in einer Zeile (Datenzeile) des Fernsehsignals übertragen wird, **dadurch gekennzeichnet,** daß in der oder in den Teletextseiten zusätzlich eine verdeckt darstellbare SOLL-Programmbeitragskennung mit erhöhtem Fehlerschutz übertragen wird, welche zusammen mit den sichtbar dargestellten Programmierungsinformationen zur Programmierung des Videoaufzeichnungsgerätes verwendet wird und bei zeitlicher Verschiebung des betreffenden Programmbeitrages bzw. damit verbundener Veränderung des sichtbar dargestellten Anfangszeitpunktes des Programmbeitrages unverändert bleibt, daß die SOLL- und IST-Programmbeitragskennungen die prognostizierte Anfangszeit des betreffenden Programmbeitrags enthalten, und daß bei Einfügung eines zusätzlichen Programmbeitrags zum prognostizierten Anfangszeitpunkt eines nur verschobenen oder gestrichenen Programmbeitrags in den SOLL- und IST-Programmbeitragskennungen des eingefügten Programmbeitrages ein vom tatsächlichen Anfangszeitpunkt geringfügig abweichender künstlicher Anfangszeitpunkt enthalten ist.

2. Verfahren nach Anspruch 1, dadurch gekennzeichnet, daß die SOLL-Programmbeitragskennungen mehrerer Programmbeiträge in einem oder mehreren Datenblöcken (Label) in einer definierten Reihenfolge übertragen werden, wobei jeder Datenblock maximal die Länge einer Schriftzeile einer Teletextseite hat und wobei gemeinsame Teile der Programmbeitragskennungen nur einmal übertragen werden.

3. Verfahren nach Anspruch 1, dadurch gekennzeichnet, daß am Ende jedes Datenblocks zumindest ein Fehlerschutzwort übertragen wird.

4. Verfahren nach Anspruch 2 oder 3, dadurch gekennzeichnet, daß der künstliche Anfangszeitpunkt geringfügig größer als der tatsächliche Anfangszeitpunkt gewählt wird, wobei aus dieser positiven Abweichung der Anfangszeitpunkte ein Abschaltbefehl für ein auf das Label mit dem Anfangszeitpunkt des gestrichenen Programmbeitrags programmiertes Videoaufzeichnungsgerät abgeleitet wird.

5. Verfahren nach Anspruch 2 oder 3, dadurch gekennzeichnet, daß der künstliche Anfangszeitpunkt geringfügig kleiner als der tatsächliche Anfangszeitpunkt gewählt wird, wobei aus dieser negativen Abweichung der Anfangszeitpunkte ein Wartebefehl für ein auf das Label mit dem Anfangszeitpunkt des nur verschobenen Programmbeitrags programmiertes Videoaufzeichnungsgerät abgeleitet wird.

6. Verfahren nach einem der Ansprüche 1 bis 5, dadurch gekennzeichnet, daß die SOLL- und IST-Programmbeitragskennungen ferner eine Kennziffer für die jeweilige Programmquelle und das Kalenderdatum enthalten.

## Claims

1. Process for the transmission of programming information for video recorders in the form of data cyclically repeated within a television signal (teletext data), which on the reproduction side can be displayed as stationary television pictures (teletext pages), the programming information being transmitted at least consists of the programme source identification, the calendar date and the forecast starting and possibly finishing times of the programme to be recorded as a visible component of one or more teletext pages and in which an actual programme identification is transmitted immediately before and optionally during the transmission of a programme in one line (data line) of the television signal, characterized in that in the teletext page or pages is additionally transmitted a desired programme identification displayable in concealed form and having increased error protection, which is used together with the visibly displayed programming information for programming the video recorder and remains unchanged in the case of a time change to the particular programme or an associated change to the visibly displayed starting time of the programme, that the desired and actual programme identifications contain the forecast starting time of the particular programme and that on inserting an additional programme at the forecast starting time of a postponed or cancelled programme the desired and actual programme identifications of the inserted programme contain an artificial starting time differing slightly from the actual starting time.

2. Process according to claim 1, characterized in that the desired programme identifications of several programmes are transmitted in one or more data blocks (labels) in a clearly defined sequence, each data block at the maximum having the length of a written line of a teletext page and in which common parts of the programme identifications are only transmitted once.

3. Process according to claim 1, characterized in that at least one error protection word is transmitted at the end of each data block.

4. Process according to claims 2 or 3, characterized in that the artificial starting time is made slightly greater than the actual starting time and from this positive deviation of the starting times it is possible to derive a switch-off instruction for a video recorder programmed on the label with the starting time of the cancelled programme.

5. Process according to claims 2 or 3, characterized in that the artificial starting time is made slightly smaller than the actual starting time and from this negative deviation of the starting time is derived a waiting instuction for a video recorder programmed on the label with the starting time of the programme which has only been postponed.

6. Process according to one of the claims 1 to 5, characterized in that the desired and actual programme identifications also contain an identification number for the programme source and the calendar date.

**Revendications**

1. Procédé pour transmettre des informations de programmation pour des appareils d'enregistrement vidéo sous la forme de données répétées cyclique-ment (données télétexte) à l'intérieur d'un signal de télévision, ces données étant susceptibles d'être représentées côté reproduction sous la forme d'images fixes de télévision (pages télétexte),

– procédé dans lequel on transmet en tant qu'information de programmation, constituant la partie visible d'une ou plusieurs pages télétexte, l'identification de la source de programme, la date de calendrier, et les instants pronostiqués du début et éventuellement de la fin de la partie de programme à enregistrer,

– procédé dans lequel une identification de la partie de programme réelle est transmise sur une ligne (ligne de données) du signal de télévision, immédiatement avant, et éventuellement pendant la diffusion d'une partie des programmes,

procédé caractérisé en ce que sur la page télétexte ou les pages de télétexte, est en outre transmise, avec une protection renforcée contre les erreurs, une identification de la partie de programme de consigne susceptible d'être représentée d'une façon masquée, qui est utilisée conjointement avec les informations de programmation représentées de façon visible pour programmer l'appareil d'enregistrement vidéo et qui, en cas de décalage dans le temps de la partie de programme concernée, et/ou de la modification qui en résulte de l'instant de début représenté de façon visible de cette partie de programme, reste inchangée, tandis que les identifications de partie de programme de consigne et les identifications de partie de programme réelle comportent l'instant pronostiqué du début de la partie de programme concernée, et que lors de l'insertion d'une partie de programme supplémentaire à l'instant de début pronostiqué d'une partie de programme seulement décalée ou bien supprimée, un instant de début artificiel et différant légèrement de l'instant de début effectif, est contenu dans les identifications de partie de programme de consigne et de partie de programme réelle de la partie de programme ainsi insérée.

2. Procédé selon la revendication 1, caractérisé en ce que les identifications de partie de programme de consigne de plusieurs parties de programme, sont transmises, selon une succession définie, dans un ou plusieurs blocs de données (label), chacun de ces blocs de données ayant au maximum la longueur d'une ligne d'écriture d'une page télétexte et les parties communes des identifications de partie de programme n'étant transmises qu'une seule fois.

3. Procédé selon la revendication 1, caractérisé en ce qu'à la fin de chaque bloc de données, est transmis au moins un mot de protection contre les erreurs.

4. Procédé selon la revendication 2 ou 3, caractérisé en ce que l'instant de début artificiel est choisi légèrement plus tardif que l'instant de début effectif, et qu'à partir de cet écart positif entre les instants des débuts, un ordre de mise en circuit est dérivé pour un appareil d'enregistrement vidéo, programmé sur le label avec l'instant de début de la partie de programme supprimée.

5. Procédé selon la revendication 2 ou 3, caractérisé en ce que l'instant de début artificiel est choisi légèrement en avance sur l'instant de début effectif, et qu'à partir de cet écart négatif entre les instants de début, un ordre d'attente est délivré pour l'appareil d'enregistrement vidéo, programmé sur le label avec l'instant de début de la partie de programme seulement décalée.

6. Procédé selon une des revendications 1 à 5, caractérisé en ce que les identifications de parties de programme de consigne et de parties de programme réelles, contiennent en outre, un numéro d'identification respectivement pour la source du programme et pour la date du calendrier.

S160　160 ARD/ZDF M: 30.06.82 17.10:51

**ARD**

MITTWOCH, 30.06.82

HEUTE ABEND ━━━━━━━━━━━━━━━

20.00-20.15 Tagesschau..............222

20.15-21.50 Marta, Marta............224

21.50-22.30 XII.Fußball-WM..........226

22.30-23.00 Tagesthemen.............225

23.00-23.50 Carl Friedrich von
　　　　　　　Weizsäcker..............227

23.50-00.00 Tagesschau

　　　　　　　NACHMITTAGSPROGRAMM auf 161

FIG. 1

607 84 156 15.43

##*2D002*040584*SS    05/07
WOCHENÜBERSICHT

FREITAG,
4.Mai 1984

IHR PROGRAMM
##*1900*1930*2015*2115*2145*2205*2245*SS
##*2325*050584*0055*SS

```
19.00 Uhr      heute
19.30 Uhr      auslandsjournal
20.15 Uhr      Der Alte
               Reihe 7 Grab 11
21.15 Uhr      Der Sport-Spiegel
21.45 Uhr      heute-journal
22.05 Uhr      Aspekte
22.45 Uhr      Sport am Freitag
23.25 Uhr      Badlands - Zerschossene
               Träume
               Amerikanischer Spielfilm
00.55 Uhr      heute
               bis ca 01.05 Uhr
```

Programm vom 5.5.>>

FIG. 2

606 84 156 13.43

05/07
WOCHENÜBERSICHT

FREITAG,
4.Mai 1984

IHR PROGRAMM

```
19.00 Uhr      heute
19.30 Uhr      auslandsjournal
20.15 Uhr      Der Alte
               Reihe 7 Grab 11
21.15 Uhr      Der Sport-Spiegel
21.45 Uhr      heute-journal
22.05 Uhr      Aspekte
22.45 Uhr      Sport am Freitag
23.25 Uhr      Badlands - Zerschossene
               Träume
               Amerikanischer Spielfilm
00.55 Uhr      heute
               bis ca 01.05 Uhr
```

Programm vom 5.5.>>

FIG. 3